# EUROPEAN PATENT SPECIFICATION

(11) **EP 2 627 526 B1**
(45) Date of publication and mention of the grant of the patent: **11.12.2019**
(21) Application number: 11832835.0
(22) Date of filing: 03.10.2011
(51) Int. Cl.: B60H 1/00, F01N 3/023

(54) **ARRANGEMENT AND METHOD FOR CONTROLLING A VENTILATION SYSTEM**
ANORDNUNG UND VERFAHREN ZUR STEUERUNG EINES BELÜFTUNGSSYSTEMS
AGENCEMENT ET PROCÉDÉ POUR COMMANDER UN SYSTÈME DE VENTILATION

(30) Priority: 15.10.2010 SE 1051078
(43) Date of publication of application: 21.08.2013
(73) Proprietor: Scania CV AB, 151 87 Södertälje (SE)
(72) Inventor: LILJESTRAND, Andreas, S-151 45 Södertälje (SE); BREMBERG, Per, S-151 60 Södertälje (SE)
(74) Representative: Scania CV AB
(86) International application number: PCT/SE2011/051173
(87) International publication number: WO 2012/050508

(56) References cited:
- EP-A1- 1 882 829
- DE-A1- 10 333 344
- JP-A- 2008 157 099
- US-A- 5 946 923

## Description

### Technical field

The invention relates to an arrangement according to the preamble of claim 1, a vehicle according to claim 7 and a method according to claim 8.

### Background

The combustion of fuel in combustion engines results in the formation of residual products which leave the engine via an exhaust system. With regard to the environment, progressively more stringent limit values are being introduced for the contents of emissions which are allowed to be released from different types of combustion engines.

The residual products in the exhaust flow take the form inter alia of particles. Various types of filter may be used to reduce the amount of particles in the exhaust flow. However, certain of these filters become blocked after a period of use and have then to be replaced or cleaned for the engine to function satisfactorily and the emission requirements to be met.

A known solution for removing particles from filters is to ensure that at chosen intervals of time during the engine's normal operation a raised temperature is imparted to the exhaust gases with the object of oxidising the particles and thereby removing them from the filter. In various of the usual engine operating situations a high enough temperature is not reached for long enough for a cleaning process to take place. In such cases it is usual to raise the temperature of the exhaust gases by injecting into them a certain amount of fuel or some other agent which raises their temperature to a high enough level or in some other way facilitates oxidation of particles in the filter.

The filter is thus reinstated for continued use. This cleaning procedure is advantageous in that the filter need not be replaced or removed from its ordinary location in the exhaust system. This mode of cleaning, or regeneration as it is usually called, may be applied at desired intervals so that the engine's emission values can be minimised.

Regeneration does however entail release of some gases which contain inter alia hydrocarbons (HC) and may have an unpleasant smell and thereby be a nuisance to people exposed to them. If the engine is in a vehicle in motion, these gases cause no problems for persons inside the vehicle, since they are swept away from the vehicle by the air flows which normally occur when the vehicle is in motion.

When the vehicle is stationary or moving only slowly, there will be a concentration of these gases in its immediate vicinity. There is then risk that the vehicle's ventilation system may draw these gases into the vehicle's interior and thereby expose the driver and passengers to them. There is therefore need for a solution to prevent the gases released during a regeneration which takes place when the vehicle is stationary or moving at slow speeds from making their way into the personnel space of the vehicle.

Similar problems arise in cases where the engine is put to marine use or serves as an industrial engine and there is an adjacent personnel space.

DE 103 33 344 A1 describe a control of the fresh air supply to a vehicle interior, whereby if conditions are detected in which exhaust gas could enter the vehicle interior during vehicle operating condition such as "cold starts", "reverse" or "abrupt braking at high speed", the fresh air supply is reduced.

### Summary of the invention

The object of the invention is to meet the above need. This is achieved by an arrangement according to claim 1 and a method according to claim 8.

The present need is met by the control unit which controls the regeneration process in the exhaust system's particle filter being connected to a monitoring unit which controls the ventilation system of the personnel space in such a way that when the regeneration process starts the monitoring unit stops the supply of air to the personnel space from the surroundings where there may be gases from the regeneration process. The air intake to the personnel space from the surroundings is halted either immediately when the regeneration process starts or a period of time after it has started.

In an embodiment of the arrangement, the engine is situated in a vehicle, a watercraft or some other application in which the engine moves or is movable, so the air supply to the personnel space is halted when the speed of the vehicle etc. is below 10 km/h. This embodiment is advantageous in that the speed stated ensures that there is enough ventilating air flow round the vehicle's personnel space and air intakes to cause any gases formed during regeneration to be swept away or be mixed with surrounding fresh air.

In an embodiment of the arrangement, a unit for supply of fuel to the exhaust gases is situated close to the particle filter and starts regeneration upon activation from the control unit. This is an advantageous embodiment for regeneration.

In an embodiment of the arrangement, the means of detecting the vehicle's speed is its speedometer. This embodiment of the arrangement reduces the components involved by making it possible to use information which is already available and existing components of the vehicle.

In an embodiment of the arrangement, the ventilation system is regulated according to whether air from the vehicle's surroundings is to be supplied to the personnel space or the air in the personnel space is to be circulated without supply of air from the surroundings.

The invention relates also to a vehicle provided with at least one arrangement according to any of the embodiments described above.

The invention relates also to a method for shutting off or at least substantially reducing air supply to the personnel space during a regeneration process.

An embodiment exemplifying the invention is described below with reference to the attached drawing.

### Brief description of drawing

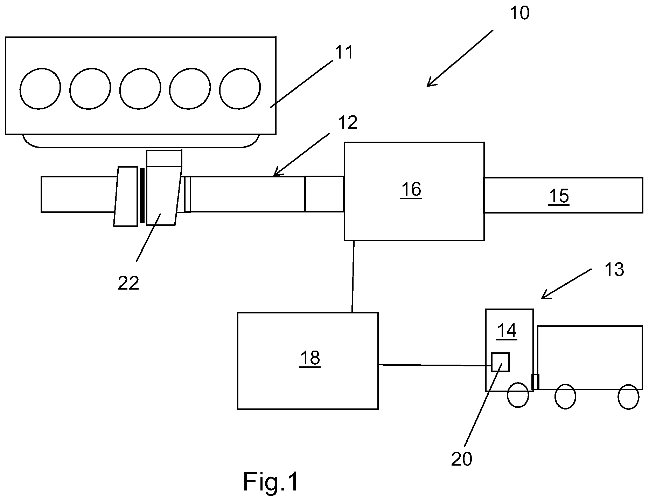

Fig. 1 depicts schematically an arrangement according to the invention.

### Detailed description of the invention

Fig. 1 depicts schematically an arrangement 10 comprising a particle-generating device in the form of a combustion engine 11, an exhaust system 12 and parts of a ventilation system for fresh air supply to personnel space 14 of a vehicle 13.

The engine 11 takes the form for example of a multi-cylinder diesel engine used to power the vehicle 13. The vehicle in Fig. 1 is depicted as a truck 13 but the invention may also be used in combination with other kinds of particle-generating devices in applications such as buses, trains, watercraft, lift trucks, crane vehicles etc. As the diagram is only schematic, no components associated with the engine, e.g. fuel supply devices etc., are illustrated.

The engine's combustion gases (exhaust gases) are led out by the exhaust system 12 to the surroundings via an exhaust pipe 15 which is situated at an appropriate location in the vehicle and is far enough away from the vehicle's personnel space 14 and from the ventilation system's fresh air intake to minimise the risk that combustion gases might be introduced into the personnel space . A particle filter 16 is situated somewhere along the exhaust pipe. The purpose of the particle filter 16 is to capture solid particles in the combustion gases and prevent them from being led out to the surroundings. The particles take the form of residual products formed during fuel combustion in the cylinders of the engine 11, and a large proportion of them are soot particles due to incomplete combustion. After a period of use, the particle filter 16 becomes blocked by the captured particles, thereby limiting the flow through the filter, with consequently adverse effects on the performance of the engine 11. The particle filter 16 may then be cleaned by so-called regeneration. After regeneration, the filter may be used again and will have regained its cleaning capacity. Regeneration of the filter 16 takes place without the filter having to be removed from its ordinary location in the exhaust system 12. Regeneration is effected by fuel being supplied to the exhaust gases so that they reach a higher temperature and/or in some other way help to oxidise the particles in the filter. This is done by means of a special injection system situated upstream of the filter 16. This injection system does not appear in the diagram and is not described in more detail, since it is well-known prior art. Alternatively, and this too is well-known prior art, the injection may be effected via the engine's ordinary fuel injection system in the form of late injection which causes no combustion in the engine 11 but only when the fuel reaches the exhaust system 12.

The exhaust system 12 comprises after the engine a turbo unit 22 with a turbine driven by the engine's exhaust gases to run a compressor for the engine's inlet air. The exhaust system 12 comprises also a silencer and may in addition comprise other components for reducing exhaust emissions, e.g. a hydrolysis catalyst, an SCR catalyst, an oxidation catalyst (DOC) or the like. No further description of these components is given here, since they are not necessary for understanding the present invention.

Regeneration of the particle filter 16 is controlled by a control unit 18. The control unit 18 also regulates fuel supply to the exhaust gases and the predetermined intervals of time at which it is measured and monitored by the control unit 18. Alternatively, the control unit may start regeneration when a certain particle level is reached in the filter, on the basis of suitable detection or measurement of the amount of particles caught in the filter. This may be done by measuring the pressure drop across the filter by means of appropriate sensors provided in the exhaust system before and after the filter 16.

The vehicle 13 comprises a ventilation system intended to control the air flow to and within the vehicle's personnel space 14 in response to a monitoring unit 20. The ventilation system may also comprises systems for warming/cooling the air supplied to the personnel space 14, in which case the monitoring unit 20 will also control the temperature regulation of the air supply to the personnel space 14.

Before, at the same time as or immediately after the regeneration process in the particle filter 16 begins, the control unit 18 sends a signal to a monitoring unit 20 which forms part of the ventilation system of the vehicle 13.

When it receives a signal from the control unit 18 that the regeneration process has been activated, the monitoring unit 20 checks the vehicle's speed. If the vehicle is stationary or travelling at below a predetermined low speed, the monitoring unit will halt the intake of air from the vehicle's surroundings to the personnel space 14 in order to prevent gases from the regeneration process being drawn into the ventilation system and thence into the personnel space. Information about the speed of the vehicle 13 may either be taken directly from its speedometer or be provided by separate measuring devices or the vehicle's navigation system. Alternatively, the vehicle's speed may be arrived at indirectly by monitoring the engine's speed or the like. Information about whether the vehicle is stationary may also be provided by its parking brake being activated. What is important is that there is a means for delivering to the monitoring unit 20 and/or the control unit 18 a signal value which represents the vehicle's speed.

When no air from the surroundings of the vehicle 13 is being supplied to the personnel space 14, it is appropriate to cause the air in the personnel space 14 to circulate in the ventilation system in order to maintain desired temperature and cleanliness of the air in the personnel space 14. In other embodiments, it is sufficient for the inlet air supply to be halted only partly but to such an extent that it may be regarded as substantially halted. Even if there are reasons for completely shutting off the air supply during a regeneration process, there are other reasons in favour of being able to supply a small amount of air to the personnel space during a regeneration process. What is important is that the supply is substantially shut off, meaning that at most less than 20% and with advantage at most less than 10% of the air supplied to the personnel space comes from the surroundings. In alternative embodiments this may be done on the basis of the vehicle's speed so that when it is stationary the air supply from the surroundings is shut off, but progressively as the vehicle's speed increases a larger proportion of air from the surroundings is allowed to be supplied to the personnel space.

When the vehicle's speed exceeds the predetermined speed, the ventilation system is switched on again so that a full supply of fresh air can once more be introduced into the personnel space even if the regeneration is ongoing. It is then supposed that there will no longer be in the vehicle's vicinity any concentrations of gases from the regeneration which might be introduced into the personnel space. The ventilation system is of course also switched on again when the regeneration ceases.

The invention is described above on the basis of some exemplifying embodiments which may of course be combined in various ways. Instead of completely shutting off the air supply to the personnel space 14 during filter regeneration, it may in alternative embodiments be at least reduced substantially. Many modern vehicles today have more or less automatically controlled ventilation systems whereby air in the personnel space is recirculated in certain operating situations, e.g. to enable a desired interior temperature to be reached more quickly. In such cases, air is prevented, or at least substantially prevented, in an appropriate way from being introduced from the surroundings. If the vehicle is equipped with such an automatically controlled ventilation system, the connection between the control unit 18 and the monitoring unit 20 can easily be made by adopting during regeneration the same ventilation state as for air recirculation in the personnel space 14.

The term "ventilation system" in the claims therefore includes the components required for being able to achieve intended functions, irrespective of their configuration in practice.

In the example described, regeneration is controlled by a control unit 18 which may be a completely separate control unit but may alternatively be part of another control unit in the vehicle, e.g. the engine's ordinary control system. The same also applies to the monitoring unit 20, which may alternatively be part of some other monitoring unit or control unit.

The invention is largely described above as used in a vehicle powered by a combustion engine. The invention may also be applied analogously with what is described above in cases where an industrial engine is installed permanently and has close to it a personnel space ventilated with air from the vicinity of the engine. In such cases it is of course not possible to arrange the control of the ventilation on the basis of any speed parameter, since the ventilation is here controlled entirely on the basis of activation of regeneration.

The invention is described in certain embodiments above as depending on the speed of a vehicle so that only at low speeds is the air supply to its personnel space halted.

The invention is also described above with reference to particles to be burnt away during regeneration which are generated by a combustion engine, but alternative applications may involve any particle-generating device. The term "engine" in the claims is therefore to be regarded as comprising also such other devices.

The invention relates to a method for controlling an arrangement as described above. The method has probably already been described in all essentials with reference to the arrangement. The invention thus relates also to a method whereby the monitoring unit 20 puts the ventilation system into a state which shuts off or at least substantially reduces air supply from the surroundings to an personnel space 14 during a regeneration process of a particle filter in the exhaust system.

According to the example described above, fuel is injected into the exhaust line with the object of regenerating the filter. In alternative embodiments, other known regeneration methods may be used which do not involve such fuel injection.

## Claims

1. An arrangement for control of a ventilation system for a personnel space such that the ventilation system is adapted to supplying air to the personnel space, which arrangement comprises a monitoring unit (20) for control of the ventilation system and comprises in addition a combustion engine (11), an exhaust system (12) for carrying the exhaust gases away from the engine (11), which exhaust system comprises a regenerable particle filter (16) and a control unit (18) for activation of regeneration in said filter (16), **characterised in that** the control unit (18) and the monitoring unit (20) are connected to one another in such a way as to enable the monitoring unit (20) to shut off or at least substantially reduce air supply from the surroundings to the personnel space (14) when a regeneration process is activated and in that the arrangement is situated in a vehicle and in that the arrangement comprises also a means for detecting the vehicle's speed, and that the control unit (18), the monitoring unit (20) and the means are connected to one another in such a way as to enable the monitoring unit to shut off or at least substantially reduce air supply from the surroundings to the personnel space (14) of the vehicle (13) if a regeneration process is activated at a time when the speed of the vehicle (13) is below a certain predetermined speed.

2. An arrangement according to claim 1, **characterised in that** the air supply to the personnel space (14) is halted or at least reduced when the speed of the vehicle (13) is below 10 km/h.

3. An arrangement according to claim 2, **characterised in that** the air supply to the personnel space (14) is halted or at least reduced when the vehicle (13) is stationary.

4. An arrangement according to any one of the foregoing claims, **characterised in that** a unit for fuel supply to the exhaust gases to start a regeneration process in situated in the exhaust system (12) upstream of the particle filter (16).

5. An arrangement according to any one of claims 1-4 **characterised in that** the means for detecting the speed of the vehicle (13) is its speedometer.

6. An arrangement according to any one of the foregoing claims, **characterised in that** the monitoring unit (20) causes the ventilation system to circulate the air in the personnel space (14) at times when regeneration is ongoing.

7. A vehicle (13) provided with an arrangement according to any one of the foregoing claims.

8. A method for control of an arrangement according to any one of claims 1-6, **characterised in that** during a regeneration process the monitoring unit (20) puts the ventilation system into a state which shuts off or at least substantially reduces air supply from the surroundings to the personnel space (14).

## Patentansprüche

1. Anordnung zur Steuerung eines Belüftungssystems für einen Personenraum, derart, dass das Belüftungssystem dazu eingerichtet ist, dem Personalraum Luft zuzuführen, wobei die Anordnung eine Überwachungseinheit (20) zur Steuerung des Belüftungssystems aufweist und ferner einen Verbrennungsmotor (11) und eine Abgasanlage (12) zum Wegführen der Abgase von dem Motor (11) umfasst, wobei die Abgasanlage einen regenerierbaren Partikelfilter (16) und eine Steuereinheit (18) zur Aktivierung einer Regeneration in dem Filter (16) aufweist,
**dadurch gekennzeichnet, dass** die Steuereinheit (18) und die Überwachungseinheit (20) miteinander solchermaßen verbunden sind, dass die Überwachungseinheit (20) eine Luftzufuhr aus der Umgebung in den Personenraum (14) abzuschalten oder zumindest wesentlich zu verringern vermag, wenn ein Regenerationsvorgang aktiviert ist, und dass die Anordnung sich in einem Fahrzeug befindet und dass die Anordnung darüber hinaus eine Einrichtung zum Erfassen der Fahrzeuggeschwindigkeit aufweist, und dass die Steuereinheit (18), die Überwachungseinheit (20) und die Einrichtung miteinander solchermaßen verbunden sind, dass die Überwachungseinheit eine Luftzufuhr aus der Umgebung in den Personenraum (14) des Fahrzeugs (13) abzuschalten oder zumindest wesentlich zu verringern vermag, falls ein Regenerationsvorgang zu einem Zeitpunkt aktiviert ist, zu dem die Geschwindigkeit des Fahrzeugs (13) unterhalb einer gewissen vorbestimmten Geschwindigkeit liegt.

2. Anordnung nach Anspruch 1,
**dadurch gekennzeichnet, dass** die Luftzufuhr zum Personenraum (14) unterbrochen oder zumindest reduziert wird, wenn die Geschwindigkeit des Fahrzeugs (13) niedriger als 10 km/h ist.

3. Anordnung nach Anspruch 2,
**dadurch gekennzeichnet, dass** die Luftzufuhr zum Personenraum (14) unterbrochen oder zumindest reduziert wird, wenn das Fahrzeug (13) still steht.

4. Anordnung nach einem der vorhergehenden Ansprüche,
**dadurch gekennzeichnet, dass** eine Einheit zur Kraftstoffzufuhr in die Abgase zum Starten eines Regenerationsvorgangs sich in der Abgasanlage (12) stromaufwärts des Partikelfilters (16) befindet.

5. Anordnung nach einem der Ansprüche 1 bis 4,
**dadurch gekennzeichnet, dass** die Einrichtung zum Erfassen der Geschwindigkeit des Fahrzeugs (13) ein Geschwindigkeitsmesser ist.

6. Anordnung nach einem der vorhergehenden Ansprüche,
**dadurch gekennzeichnet, dass** die Überwachungseinheit (20) veranlasst, dass das Belüftungssystem die Luft in den Personenraum (14) zu Zeitpunkten umwälzt, zu denen eine Regeneration stattfindet.

7. Fahrzeug (13), das mit einer Anordnung nach einem der vorhergehenden Ansprüche ausgerüstet ist.

8. Verfahren zur Steuerung einer Anordnung nach einem der Ansprüche 1 bis 6,
**dadurch gekennzeichnet, dass** während eines Regenerationsvorgangs die Überwachungseinheit (20) das Belüftungssystem in einen Zustand versetzt, der eine Luftzufuhr aus der Umgebung in den Personenraum (14) absperrt oder zumindest wesentlich reduziert.

## Revendications

1. Dispositif de commande d'un système de ventilation pour un espace de personnel de telle sorte que le système de ventilation est adapté pour fournir de l'air à l'espace de personnel, lequel dispositif comprend une unité de surveillance (20) pour commander le système de ventilation et comprend en outre un moteur à combustion (11), un système d'échappement (12) pour évacuer les gaz d'échappement du moteur (11), lequel système d'échappement comprend un filtre à particules (16) récupérable et une unité de commande (18) pour activer la régénération dudit filtre (16), **caractérisé en ce que** l'unité de commande (18) et l'unité de surveillance (20) sont connectées l'une à l'autre de manière à permettre à l'unité de surveillance (20) d'arrêter ou au moins de réduire considérablement l'alimentation en air de l'environnement vers l'espace personnel (14) lorsqu'un processus de régénération est activé et dans le cas où le dispositif se trouve dans un véhicule et que l'arrangement comprend également un moyen de détecter la vitesse du véhicule, et que l'unité de commande (18), l'unité de surveillance (20) et les moyens sont raccordés l'un à l'autre de manière à permettre à l'unité de surveillance de fermer ou de réduire au moins considérablement l'alimentation en air de l'environnement vers l'espace personnel (14) du véhicule (13) si un processus de régénération est activé à un moment où la vitesse du véhicule (13) est inférieure à une certaine vitesse prédéterminée.

2. Dispositif selon la revendication 1,
**caractérisé en ce que** l'alimentation en air de l'espace personnel (14) est interrompue ou au moins réduite lorsque la vitesse du véhicule (13) est inférieure à 10 km/h.

3. Dispositif selon la revendication 2,
**caractérisé en ce que** l'alimentation en air de l'espace personnel (14) est interrompue ou au moins réduite lorsque le véhicule (13) est à l'arrêt.

4. Dispositif selon l'une quelconque des revendications précédentes,
**caractérisé en ce qu'**une unité d'alimentation en carburant des gaz d'échappement pour démarrer un processus de régénération est située dans le système d'échappement (12) en amont du filtre à particules (16).

5. Dispositif selon l'une quelconque des revendications 1 à 4,
**caractérisé en ce que** le moyen de détection de la vitesse du véhicule (13) est son compteur de vitesse.

6. Dispositif selon l'une quelconque des revendications précédentes,
**caractérisé en ce que** l'unité de surveillance (20) fait circuler l'air dans l'espace personnel (14) lorsque la régénération est en cours.

7. Véhicule (13) muni d'un dispositif selon l'une quelconque des revendications précédentes.

8. Procédé de contrôle d'un dispositif selon l'une quelconque des revendications 1 à 6,
**caractérisé en ce que** pendant un processus de régénération, l'unité de surveillance (20) met le système de ventilation dans un état qui coupe ou au moins réduit sensiblement l'alimentation en air de l'espace personnel (14).
